# EUROPEAN PATENT APPLICATION

(11) **EP 4 708 896 A1**
(43) Date of publication of application: **11.03.2026**
(21) Application number: 25720231.7
(22) Date of filing: 09.04.2025
(51) Int. Cl.: H04N 23/73

(54) **ELECTRONIC DEVICE FOR ADJUSTING AMOUNT OF LIGHT RECEIVED BY IMAGE SENSOR**

(30) Priority: 15.07.2024 KR 20240092987; 10.09.2024 KR 20240122870
(71) Applicant: SAMSUNG ELECTRONICS CO., LTD., Yeongtong-gu Suwon-si, Gyeonggi-do 16677 (KR)
(72) Inventor: KIM, Janghoon, Suwon-si Gyeonggi-do 16677 (KR); SHIMOKAWA, Shuichi, Suwon-si Gyeonggi-do 16677 (KR); PARK, Jaehyoung, Suwon-si Gyeonggi-do 16677 (KR); KANG, Kawang, Suwon-si Gyeonggi-do 16677 (KR); MOON, Inah, Suwon-si Gyeonggi-do 16677 (KR); SONG, Byeongjoo, Suwon-si Gyeonggi-do 16677 (KR); YOUN, Yeotak, Suwon-si Gyeonggi-do 16677 (KR); HA, Daesung, Suwon-si Gyeonggi-do 16677 (KR)
(74) Representative: Gulde & Partner
(86) International application number: PCT/KR2025/004798
(87) International publication number: WO 2026/019012

(57) **Abstract**

An electronic device includes: a first processor (302); and an image sensor (301) configured to convert light received through a lens into an electrical signal, convert the electrical signal into image data, and output the image data to the processor. The image sensor (301) may perform calculating of a first shutter value and a first gain value for causing a current brightness of the image data acquired by the image sensor to converge to a designated target brightness value and a streaming operation of acquiring image data using the first shutter value and the first gain value and outputting the acquired image data to the processor.

## Description

### [Technical Field]

The present disclosure relates to an electronic device capable of regulating the amount of light received by an image sensor of a camera.

### [Background Art]

A shutter serves as an eyelid of a human eye, and shutter speed refers to speed at which the shutter is open and closed. When the shutter speed is slow, the time for which light is received by the image sensor increases, so the image may become brighter. When the shutter speed is fast, the time for which light is received decreases, so the image may become darker. The shutter may be classified into a mechanical shutter in which the actual shutter moves, and an electronic shutter without mechanical parts. In general, portable electronic devices (e.g., smart phone) use the electronic shutter. Therefore, the shutter speed may be expressed as exposure time (the time for which a pixel array in an image sensor receives light).

Overexposure may make an image too bright, causing severe saturation, and relatively underexposure may make an image too dark, making it difficult to identify the image. The electronic device may regulate the amount of light incident on the image sensor to generate an image with appropriate brightness. For example, the electronic device may perform auto exposure control (AEC) as a function of regulating the exposure time using the electronic shutter.

The above-described information is provided as the related art for the purpose of helping to understand the present disclosure. None of the above-described contents raises any claim or determination regarding the applicability of prior art related to the present disclosure.

### [Disclosure of Invention]

### [Technical Problem]

When the camera is turned on, the AEC may be performed. For example, the image sensor may generate image data by converting light received through a lens into an electrical signal and converting the electrical signal into a digital signal. In the electronic device, a processor (e.g., an application processor (AP) and/or an image signal processor (ISP)) may determine the time for which the image sensor is exposed to light and a gain (amplification rate of the electrical signal) so that the image data has a designated brightness value using the image data received from the image sensor.

The image sensor may generate the image data based on the exposure time and gain determined by the processor. The image sensor may provide the generated image data to the processor. The processor may process the image data received from the image sensor into preview data for display on a display and display the preview data on the display.

In an embodiment the present disclosure, by performing a calculation of shutter and gain value for brightness conversion directly in the image sensor, it is possible to improve processing speed, reduce a frame loss and/or power consumption and efficiently use resources.

In an embodiment of the present disclosure, the electronic device may quickly enter a preview mode for displaying the image on the display by performing the AEC on the image sensor without intervention of the processor.

The technical problems to be achieved by the present disclosure are not limited to the above-mentioned objects. That is, other technical problems that are not mentioned may be obviously understood by those skilled in the art to which the present invention pertains from the following description.

### [Solution to Problem]

According to an embodiment, an electronic device includes: a processor; an image sensor configured to convert light received through a lens into an electrical signal, convert the electrical signal into image data, and output the image data to the processor; and a memory storing instructions. When executed by the image sensor individually or collectively, the instructions may cause the image sensor to perform a calculation on a first shutter value and a first gain value for causing brightness of the image data acquired by the image sensor to converge to a designated target brightness value. The instructions may cause the image sensor to perform a streaming operation of acquiring image data using the first shutter value and the first gain value and outputting the acquired image data to the processor.

According to an embodiment, a method of operating an electronic device is provided. The electronic device includes: a processor; and an image sensor configured to convert light received through a lens into an electrical signal, convert the electrical signal into image data and output the image data to the processor. The method may include: calculating, by the image sensor, a first shutter value and a first gain value for causing brightness of the image data acquired by the image sensor to converge to a designated target brightness value; and performing, by the image sensor, a streaming operation of acquiring image data using the first shutter value and the first gain value and outputting the acquired image data to the processor.

According to an embodiment, a recording medium, in which instructions that can be read by an image sensor in an electronic device are stored, is provided. The image sensor may convert light received through a lens into an electrical signal, convert the electrical signal into image data, and output the image data to the processor. When executed by the image sensor individually or collectively, the instructions may cause the image sensor to perform a calculation on a first shutter value and a first gain value for causing brightness of the image data acquired by the image sensor to converge to a designated target brightness value. The instructions may cause the image sensor to perform a streaming operation of acquiring image data using the first shutter value and the first gain value and outputting the acquired image data to the processor.

### [Advantageous Effects of Invention]

According to an embodiment of the present disclosure, by performing a calculation of shutter and gain value for brightness conversion directly in the image sensor, it is possible to improve processing speed, reduce a frame loss and/or power consumption and efficiently use resources. According to an embodiment of the present disclosure, an electronic device can quickly enter a preview mode for displaying an image on a display. In addition, various effects that are directly or indirectly understood through this document can be provided.

### [Brief Description of Drawings]

FIG. 1 is a block diagram of an electronic device in a network environment according to various embodiments.
FIG. 2 is a block diagram illustrating a camera module according to various embodiments.
FIG. 3 is a block diagram of the electronic device according to various embodiments.
FIG. 4 is a diagram illustrating examples of streaming modes performed in the electronic device.
FIG. 5 is a flowchart for describing an auto exposure control (AEC) mode performed in an image sensor according to an embodiment.
FIG. 6 illustrates an example of an exposure chart available in the image sensor for causing brightness of an image to converge to target brightness.
FIG. 7 is a flowchart for describing operations performed in the electronic device to quickly acquire an image with appropriate brightness from the image sensor according to an embodiment.
FIG. 8 is a flowchart for describing the operations performed in the electronic device to quickly acquire the image with appropriate brightness from the image sensor according to an embodiment.
FIGS. 9A to 9C are diagrams illustrating exposure values calculated while performing AEC in an image sensor 301 according to an embodiment.
FIG. 10 is a flowchart for describing the operations performed in the electronic device to quickly acquire the image with appropriate brightness from the image sensor according to an embodiment.
FIG. 11 is a diagram for describing the AEC mode performed in the image sensor according to an embodiment.

Hereinafter, embodiments of the present disclosure will be described in detail with reference to the drawings so that those skilled in the art to which the present disclosure pertains may easily practice the disclosure. However, the disclosure may be implemented in various different forms, and is not limited to embodiments described herein. In connection with the description of the drawings, the same or similar reference numerals may be used for the same or similar components. In addition, in the drawings and related descriptions, descriptions of well-known functions and configurations may be omitted for clarity and conciseness.

### [Mode for the Invention]

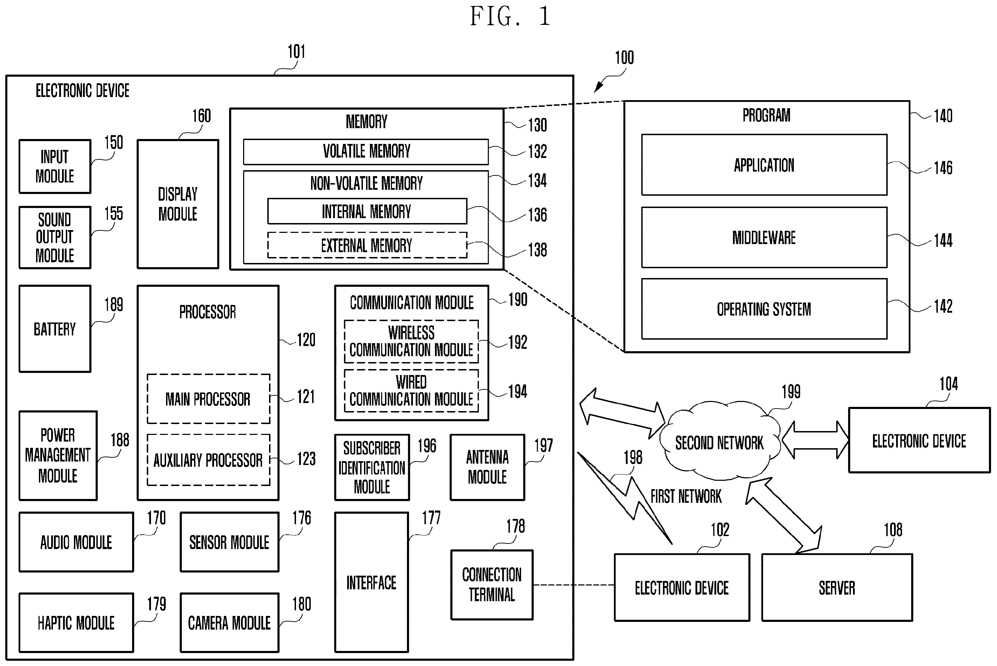

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

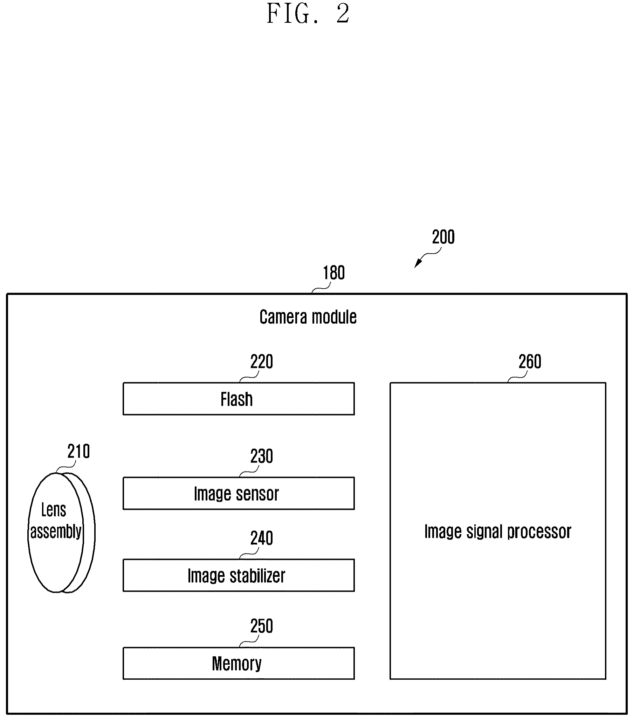

Fig. 2 is a block diagram 200 illustrating the camera module 180 according to various embodiments. Referring to Fig. 2, the camera module 180 may include a lens assembly 210, a flash 220, an image sensor 230, an image stabilizer 240, memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer.

The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display module 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules180 may form a telephoto camera. Similarly, at least one of the plurality of camera modules 180 may form, for example, a front camera and at least another of the plurality of camera modules 180 may form a rear camera.

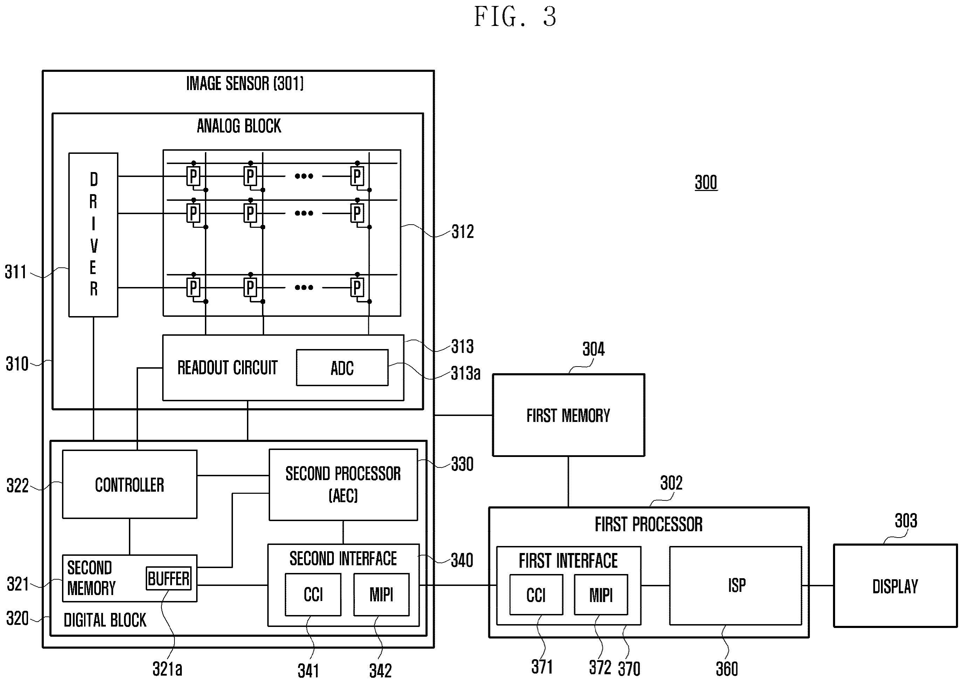

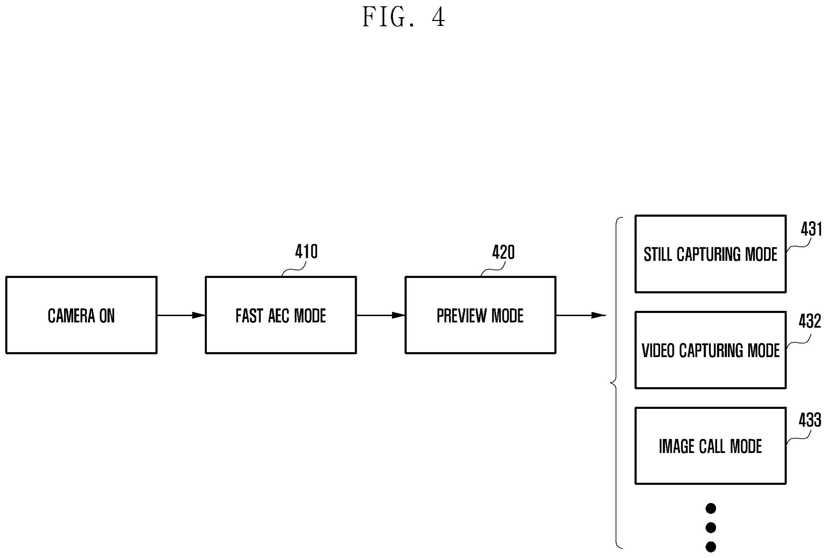

FIG. 3 is a block diagram of an electronic device 300 according to various embodiments. FIG. 4 is a diagram illustrating examples of streaming modes performed in the electronic device 300.

The image sensor 301 may convert light received through a lens into an electrical signal. Further, the image sensor 301 may convert the electrical signal into image data and provides or outputs the image data to the first processor 302. According to various embodiments of the present disclosure, this is explained in more detail below.

Referring to FIG. 3, the electronic device 300 (e.g., electronic device 101) may include an image sensor 301, a first processor 302, a display 303, and a first memory 304.

The image sensor 301 may be a component (e.g., image sensor 230 of FIG. 2) of a camera and may generate image data and provide the generated image data to the first processor (e.g., application processor) 302. The first processor 302 may process the image data (e.g., compression for storage in the first memory 304 and/or resizing for preview on the display 303) and display the processed image data on the display 303 (e.g., display module 160 of FIG. 1) or store the processed image data in the first memory 304.

The first memory 304 (e.g., the memory 130 of FIG. 1) may store instructions. When executed by the first processor 302, the instructions may cause the first processor 302 to perform a given function (e.g., auto exposure control (AEC), white balance).

The image sensor 301 may include an analog block 310 and a digital block 320. The analog block 310 may convert light received through a lens (e.g., the lens assembly 210 of FIG. 2) into an electrical signal and output the electrical signal to the digital block 320. The analog block 310 may include a driver 311, a pixel array 312, and a readout circuit 313. The digital block 320 may control the analog block 310 under the control of the first processor 302 and provide the image data received from the analog block 310 to the first processor 302. According to an embodiment, the digital block 320 may include a second memory 321, a controller 322, a second processor 330, and a second interface 340.

The driver 311 may output a control signal (e.g., a selection signal, a reset signal, and a transmission signal) to a pixel array 512 under the control of the controller 322.

The pixel array 312 may include a plurality of pixels P(i, j) arranged in a two-dimensional manner, where i and j represent positions of pixels, i is a row number, and j is a column number). For example, each of the pixels may include a photoelectric transformation element (or a light detection element: a position sensitive detector (PSD)) and a plurality of transistors (e.g., a reset transistor, a transmission transistor, a selection transistor, and a driver transistor).

The pixel array 312 may include a plurality of column lines. The column lines may be electrically connected to the pixels arranged in a column direction, respectively. Pixels of an i-th row in the pixel array 312 may receive a control signal from the driver 311, and perform photoelectric transformation (converting an optical signal into an electrical signal) by the control signal and output the electrical signal to the readout circuit 313 through a j-th column line.

For example, the reset transistor may reset a floating diffusion (FD) region of the corresponding pixel in response to a reset signal (RS) received from the driver 311. The transmission transistor may transmit charge accumulated in the photoelectric transformation element to the floating diffusion region in response to the transmission signal received from the driver 311. The drive transistor may amplify an electrical potential of the charge accumulated in the floating diffusion region. The selection transistor may output an electrical potential amplified by the drive transistor to the column line in response to a selection signal received from the driver 311.

The readout circuit 313 may sequentially select the column lines one by one, receive an electrical signal (electrical potential) from the selected column line, and output the received electrical signal to the digital block 320.

The readout circuit 313 may include an analog-to-digital converter (ADC) 313a that converts the electrical signal received from the selected column line into pixel data (digital signal) and outputs the pixel data. According to an embodiment, the ADC 313a may be included in the digital block 320 or may be included as a separate component.

The digital block 320 (e.g., controller 322) may store pixel data sequentially received from the readout circuit 313 in a buffer 321a (e.g., memory area allocated for pixel data storage in the second memory 321), and then, when the pixel data is collected from designated pixels (i.e., when one image data (in other words, a frame) is obtained), output the image data to another component of the electronic device 300 (e.g., the first processor 302) through the second interface 340.

In the digital block 320, the controller 322 may control the analog block 310 and the ADC 313a. The controller 322 may control the operation (e.g., the reset operation (e.g., the operation of outputting a reset signal to pixels in an i-th column among pixels) of the driver 311, the transmission operation (e.g., the operation of outputting the transmission signal to the pixels in the i-th column), and a row line selection operation (e.g., the operation of outputting the selection signal to the pixels in the i-th column)). In addition, the controller 322 may control the column line selection operation of the readout circuit 313 (e.g., the operation of enabling the j-th column line and disabling the remaining column lines).

The controller 322 may control the input/output of the buffer 321a. For example, the controller 322 may integrate the pixel data sequentially received from the readout circuit 313 to generate one frame and store the generated frame in the buffer 321a. The controller 322 may output the frame stored in the buffer 321a to the first processor 302 through the second interface 340. The controller 322 may also output the frame stored in the buffer 321a to the second processor 330.

A series of operations (e.g., the reset operation, the transmission operation, the row line selection operation, the operation of generating the frame and storing the generated frame in the buffer 321a, and the operation of outputting the frame stored in the buffer 321a to the first processor 302 and/or the second processor 330) performed to generate the frame in the image sensor 301 as described above and output the generated frame to the first processor 302 and/or the second processor 330 may be referred to as a streaming operation (in other words, a streaming mode).

The streaming operation may be performed based on the configuration information stored in the second memory 321. For example, the controller 322 may perform the streaming operation based on the configuration information stored in the second memory 321 in response to a "command to perform the streaming" received from the first processor 302 through the second interface 340. According to an embodiment, when the streaming is not required (e.g., when the streaming mode is set to streaming off), the image sensor 301 may be operated in a standby mode. For example, when the second memory 321 is a volatile memory, the second memory 321 may be supplied with power from a battery, for example, through a PMIC (e.g., the power management module 188 of FIG. 1) so that the configuration information is not erased while being in the standby mode, and the supply of power to other components (e.g., analog block 310, controller 322, and second processor 330) may be interrupted.

The second memory 321 may receive the configuration information for the streaming operation from the first memory 304 through the second interface 340 and store the received configuration information. For example, the second interface 340 may transmit the configuration information stored in the first memory 304 to the second memory 321 under the control of the first processor 302 or the controller 322. The configuration information stored in the second memory 321 may include information about parameters (e.g., a light exposure time, a frame interval indicating the time between an exposure start time of a frame and an exposure start time of the next frame, so-called frame readout time required for the readout circuit 313 to read electrical signals from all pixels, frame rate (e.g., frame per second (fps)), white balance, shutter speed) for driving the camera. In addition, the configuration information stored in the second memory 321 may include information about a designated streaming mode (e.g., an AEC mode, a preview mode, a video capturing mode, a still capturing mode, a panorama mode, a scene mode, etc.). For example, when the image sensor 301 changes from the standby mode to the streaming mode while maintaining the parameters for driving the camera in the standby mode or information related to the streaming mode, the image sensor 301 may generate a frame using the information and output the frame to the first processor 302 and/or the second processor 330.

The second interface 340 may connect the digital block 320 to the first processor 302 through at least one data line, and transmit the command of the first processor 302 to the digital block 320 (e.g., the controller 322 and/or the second processor 330). For example, the second interface 340 may receive, from the first processor 302, a command to set the operating mode of the image sensor 301 to the streaming mode or the standby mode and transmit the received command to the digital block 320. The second interface 340 may output the frame generated by the digital block 320 to the first processor 302.

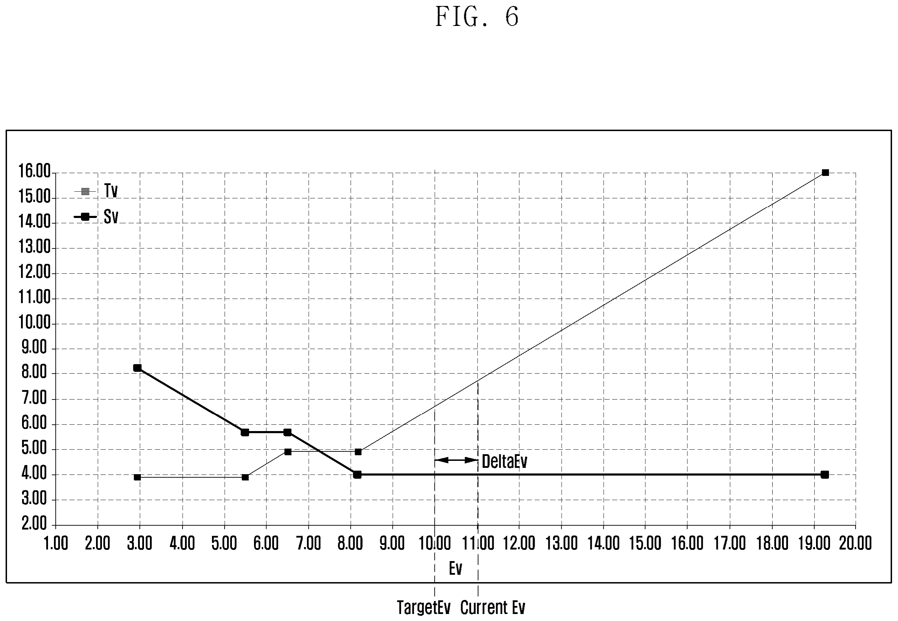

In the image sensor 301, the digital block 320 may communicate data with the first processor 302 through a camera control interface (CCI) interface (e.g., an inter integrated circuit (I2C) interface) 341 in the second interface 340. According to an embodiment, the controller 322 may receive the configuration information (e.g., an exposure chart (see FIG. 6) for obtaining a shutter value and a gain value (in other words, a sensor sensitivity value) as the parameters necessary for performing the AEC mode) for performing auto exposure control(AEC) in the digital block 320 from the first processor 302 through the CCI interface 341. The controller 322 may provide results (e.g., information about the brightness of the frame) performed in the AEC mode to the first processor 302 through the CCI interface 341. The shutter value described above may be a value representing the shutter speed or the exposure time. The gain value described above may be a value representing an amplification rate of the electrical signal in the readout circuit 313.

In the image sensor 301, the digital block 320 may communicate data with the first processor 302 through a mobile industry processor interface (MIPI) interface 342 in the second interface 340. For example, the controller 322 may output the image data (frame) generated by the image sensor 301 to the first processor 302 through the MIPI interface 342. According to an embodiment, the controller 322 may also provide the results (e.g., the information about the brightness of the frame) performed in the AEC mode to the first processor 302 through the MIPI interface 342.

When the AEC mode is performed by the first processor 302, the data communication through the interface between the image sensor 301 and the first processor 302 is essential, and thus the power consumption may occur due to the data communication. In addition, while the first processor 302 processes an auto exposure (AE) procedure, the image sensor 301 may perform the streaming. The frame loss (e.g., the first processor 302 does not process the received frame while performing the AE calculation) and/or the unnecessary power consumption may occur due to the streaming. According to various embodiments of the present disclosure, by performing the AE procedure in the image sensor 301, it is possible to reduce the frame loss and/or power consumption and efficiently use resources.

The second processor 330 in the image sensor 301 may perform an AEC mode 410 (see FIG. 4). An operating mode of the camera may be switched from a power off mode in which the supply of power to the image sensor 301 is interrupted or a standby mode in which the supply of power to the second memory 321 is maintained in order not to erase the configuration information stored in the second memory 321 to the AEC mode 410, based on the occurrence of a camera on event. The camera on event may include a user input to execute a camera application. For example, the first processor 302 may receive a user touch input for a camera icon from the display 303. In response to receiving the camera on event, the first processor 302 may control the PMIC to supply power to the image sensor 301. In addition, when the camera on event occurs in the power off mode, the first processor 302 may transmit the configuration information (e.g., exposure chart) required for the image sensor 301 to operate in the streaming mode (e.g., AEC mode 410) to the image sensor 301 through a first interface 370. Here, the first interface 370 is an element configured in the first processor 302 and may include a CCI interface 371 and a MIPI interface 372. For example, the first processor 302 may transmit the configuration information to the image sensor 301 through the CCI interface 371 and receive the image data generated by the image sensor 301 from the image sensor 301 through the MIPI interface 342.

According to an embodiment, when the instruction stored in the first memory 304 and/or the second memory 321 is executed by the second processor 330, the image sensor 301 may perform the AEC mode 410. The AEC mode 410 may include the reset operation, the transmission operation, the row line selection operation, the operation of generating the frame and storing the frame in the buffer 321a, and the operation of outputting the frame stored in the buffer 321a to the second processor 330. The second processor 330 may be a block (or logic) in charge of the instruction processing (i.e., AEC) in the digital block 320.

The second processor 330 may perform the AEC mode 410 at a fast speed (or high speed). According to an embodiment, the second processor 330 may control the driver 311 and the readout circuit 313 through the controller 322 to output pixel data at a high speed (e.g., 240fps). While the image sensor 301 performs the AEC mode 410 at a high speed, the second processor 330 may control the digital block 320 to generate a frame at a low resolution. For example, the second processor 330 may control the readout circuit 313 through the controller 322 to perform a binning mode (or, binning operation). The binning mode may include, for example, a process in which the readout circuit 313 sums electrical signals (electrical potential) received from adjacent pixels (e.g., four) and performs an ADC on the summed electrical signal and output the ADCed electrical signal to the controller 322. By performing the binning mode, a relatively small number of pixel data may be output to the controller 322, so the resolution of the frame generated from the digital block 320 may be lowered. The reason for lowering the resolution may be to allow the image sensor 301 to perform the AE procedure quickly. Here, the AE procedure may be defined as a task of determining the time for which the pixel array 312 is exposed to light and the amplification rate (hereinafter, gain value) of the electrical signal in the readout circuit 313 so that the image (frame) has a designated target brightness value. The second processor 330 may perform the fast AE processing by processing the low-resolution frame.

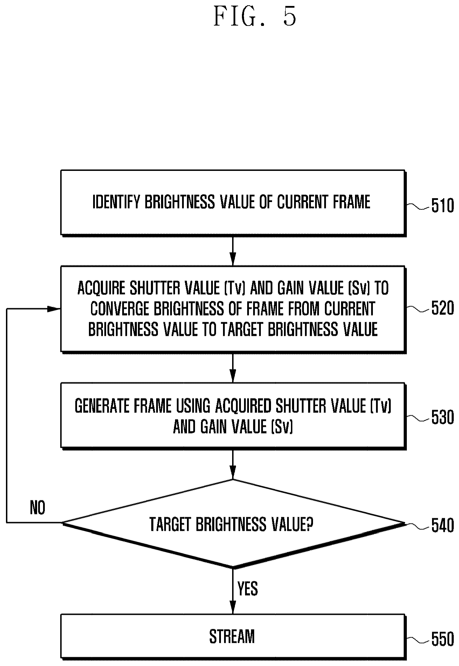

According to an embodiment of the AE procedure, the second processor 330 may acquire first image data from the controller 322 through the buffer 321a, and may identify a brightness value (hereinafter, a first brightness value) of the first image data. The second processor 330 may calculate the shutter value and the gain value for the brightness of the image data to be provided from the image sensor 301 to the first processor 302 to converge from the first brightness value to the target brightness value (hereinafter, a second brightness value). The second processor 330 may control the driver 311 and the readout circuit 313 through the controller 322 so that the pixel array 312 is exposed to light based on the calculated shutter value and the electrical signal is output based on the calculated gain value. The AE procedure performed in the image sensor 301 will be described in detail below with reference to FIG. 5.

When the AE procedure is completed by the second processor 330 (e.g., the brightness of the image data converges to the target brightness value), the image sensor 301 may perform a preview mode 420 (see FIG. 4). For example, the controller 322 may control the driver 311 and the readout circuit 313 to output the pixel data at a low speed (e.g., 60fps). The controller 322 may terminate the binning mode, generate a frame of a designated high resolution, and provide the frame to the first processor 302 through the second interface 340 (e.g., the MIPI interface 342). The first processor 302 may include an image signal processor (ISP) 360 (e.g., the image signal processor 260 of FIG. 2). The ISP 360 may process (e.g., resize) the frame received through the first interface 370 (e.g., the MIPI interface 372) into a preview image and output the processed preview image to the display 303. The display 303 may display the preview image received from the first processor 302. Thereafter, the first processor 302 may command the image sensor 301 to switch the operating mode of the camera from the preview mode 420 to another streaming mode (e.g., a still capturing mode 431, a video capturing mode 432, or an image call mode 433 of FIG. 4) through the first interface 370 (e.g., the CCI interface 371) based on the user input. The controller 322 may receive the mode switching command from the second interface 340 (e.g., the CCI interface 341). The controller 322 may identify the configuration information corresponding to the mode requested by the first processor 302 from the second memory 321, and generate the frame based on the identified configuration information. The controller 322 may transmit the generated frame to the first processor 302 through the second interface 340 (e.g., the MIPI interface 342).

According to an embodiment, the AEC mode may be classified into an automatic mode, a manual mode, and a delay mode, as exemplified in Table 1 below, in connection with a performance entity and whether the mode is automatically switched. The first processor 302 may transmit a command to start streaming (e.g., the stream on command) to the image sensor 301 through the first interface 370 (e.g., the CCI interface 371), based on the occurrence of the camera on event. When the image sensor 301 is in the standby mode, the configuration information about one of the automatic mode, the manual mode, and the delay mode may be pre-stored in the second memory 321. When the image sensor 301 is in a power-off state, the first processor 302 may transmit the configuration information including information about one of the automatic mode, the manual mode, and the delay mode to the image sensor 301 through the first interface 370 (e.g., the CCI interface 371), based on the occurrence of the camera on event. The second processor 330 may perform the AEC mode based on configuration information.

**[Table 1]**

| | Performance entity of AEC | Whether to automatically switch to preview mode |
|---|---|---|
| Automatic mode | Image sensor | Automatic switching |
| Manual mode | Image sensor | Manual switching |
| Delay mode | Image sensor | Manual switching (standby) |

When the configuration information is about the automatic mode, the second processor 330 may perform the AEC mode, and when the AE procedure is completed as the result of the performance, control the controller 322 to automatically switch the mode and perform the preview mode on the image sensor 301. Thus, in the automatic switching mode, a time until performing of the streaming may be reduced without additionally required data communication.

When the configuration information corresponds to the manual mode, the second processor 330 may perform the AEC mode to complete the AE procedure, and switch the mode from the AEC mode to the preview mode, under the control of the first processor 302. According to an embodiment, the second processor 330 may transmit the message indicating that the AE procedure is completed to the first processor 302 through the second interface 340 (e.g., the CCI interface 341). For example, the second processor 330 may transmit a flag to the first processor 302 that triggers the first processor 302 to issue the command to start streaming (e.g., the stream on command). The first processor 302 may transmit the streaming command to the image sensor 301 through the first interface 370 (e.g., the CCI interface 371) based on receiving the flag. The image sensor 301 may operate in the standby mode after completing the AE procedure, and then perform the preview mode in response to the streaming command received through the second interface 340 (e.g., the CCI interface 341).

When the configuration information corresponds to the delay mode, the second processor 330 may perform the AEC mode to complete the AE procedure. After completing the AE procedure, the second processor 330 may wait for the command from the first processor 302 without switching to the preview mode. The first processor 330 may transmit a secondary command to start streaming to the image sensor 301 through the first interface 370 (e.g., the CCI interface 371) when a designated waiting time (e.g., 66 ms) has elapsed after transmitting a primary command to start streaming (e.g., the stream on command). The image sensor 301 may operate in the standby mode after completing the AE procedure, and then perform the preview mode in response to the secondary command received through the second interface 340 (e.g., the CCI interface 341).

FIG. 5 is a flowchart for describing the AEC mode performed in the image sensor 301 according to an embodiment. FIG. 6 illustrates an example of an exposure chart available in the image sensor 301 for causing brightness of an image to converge to the target brightness. In FIG. 6, an x-axis (horizontal axis) represents an exposure value Ev, and a y-axis (vertical axis) represents a shutter value Tv or a gain value Sv. Instructions may be stored in the first memory 304 and/or the second memory 321. When the instructions are executed by the image sensor 301 (e.g., the second processor 330), the image sensor 301 may perform the operations of FIG. 5. The information corresponding to the exposure chart of FIG. 6 may be stored in the second memory 321. The image sensor 301 may use information about the exposure chart stored in the second memory 321 when performing the AEC mode. According to an embodiment, the image sensor 301 may perform the operations of FIG. 5 in response to the streaming command (e.g., the stream on command) of the first processor 302.

In operation 510, the image sensor 301 may identify a current brightness value (hereinafter, the first brightness value) in a current frame (e.g., the frame stored in the buffer 321a) (hereinafter, the first image data). The image sensor 301 may calculate the brightness value by calculating an average of the entire area of the current frame. Alternatively, the image sensor 301 may calculate an average of a designated region of interest (ROI) in the current frame. For example, the image sensor 301 may divide the current frame into 16 (4*4), 64 (8*8), 256 (16*16), or 4096 (64*64) areas and calculate the average of the ROI (e.g., the center area) among the areas. The brightness value may mean a luminance value that indicates how bright the image (subject) appears when viewed by an observer (user).

In operation 520, the image sensor 301 may acquire the shutter value Tv (see FIG. 6) and the gain value Sv (see FIG. 6) for causing the brightness of the frame to converge from the first brightness value to the target brightness value (hereinafter, the second brightness value). The shutter value Tv (see FIG. 6) may be a value representing the shutter speed or the exposure time. The gain value Sv (see FIG. 6) may be a value representing the amplification rate of the electrical signal in the readout circuit 313.

According to an embodiment, the image sensor 301 may acquire a target exposure value (target Ev; see FIG. 6) for causing a frame to have a target brightness value, for example, using the exposure chart of FIG. 6. Here, the exposure value may mean an illuminance value representing the amount of light reaching the image sensor 301 (subject). Referring to FIG. 6, the image sensor 301 may calculate delta Ev using a given mathematical expression. For example, when the given mathematical expression for calculating the delta Ev is log2(current Y/target Y)(= log(current Y/target Y)/log2) and the current brightness value(current Y) is half of the target brightness value (target Y), delta Ev is calculated as -1(=log2(0.5)). When the current exposure value (current Ev) corresponding to the current brightness value is 11, the target exposure value (target Ev)(= current Ev + delta Ev) is 10. The image sensor 301 may be identified in the exposure chart of FIG. 6 as having a shutter value Tv of 6.7 and a gain value Sv of 4 corresponding to a target exposure value (target Ev) of 10.

In operation 530, the image sensor 301 may generate the frame (hereinafter, second image data) using the acquired shutter value Tv and gain value Sv.

In operation 540, the image sensor 301 may determine whether the second image data has the target brightness value. When the second image data does not converge to the target brightness value, the image sensor 301 may perform operations 520 and 530 again and selectively perform operation 540 based on the result. For example, when the number of repetitions reaches a predetermined threshold times of number (e.g., 4 times) or the elapsed time exceeds a threshold time (e.g., several milliseconds (ms)) set for the AE procedure, the following operation 550 may be performed.

When the AE procedure is completed in the image sensor 301 (e.g., when the second image data has the target brightness value(for example, within a target brightness interval or in a brightness interval with respect to the target brightness value) or when the above-described condition (e.g., when the threshold number of times is reached or the threshold time is exceeded) is satisfied), in operation 550, the image sensor 301 may perform the streaming to output the frame (e.g., the image data) to the first processor 302. For example, the image sensor 301 may generate the frame based on the shutter value Tv and the gain value Sv acquired through the AE procedure (operations 510 to 530) described above and the configuration information (e.g., frame rate, white balance, resolution) corresponding to the preview mode. The image sensor 301 may store the generated frame in the buffer 321a and output the stored frame to the first processor 302 through the second interface 340 (e.g., MIPI interface 342).

According to an embodiment, the exposure chart used to acquire the target exposure value (target Ev) may vary depending on attributes of the image to be acquired. For example, when the image to be acquired is set to motion blur (e.g., an image having a visual effect in which the movement of the subject remains as an afterimage), the image sensor 301 may use an exposure chart for obtaining motion blur during the AE procedure. For example, the shutter value in the exposure chart may be set higher than the shutter value in a general exposure chart. In addition, the gain value in the exposure chart may be set relatively lower than the gain value in a general exposure chart. As another example, the gain value may vary depending on the type of set streaming mode. When the streaming mode is the video capturing mode, an exposure chart optimized for a video digital image stabilizer (Vdis) may be used in the image sensor 301.

According to the embodiment above described with reference to FIG. 5, the AE procedure may be performed quickly (e.g., 240fps) in the image sensor 301. As a result, the AE procedure is performed mainly by the image sensor 301, which generates frames (image data), so resources (e.g., communication interface, memory, battery power) may be used efficiently.

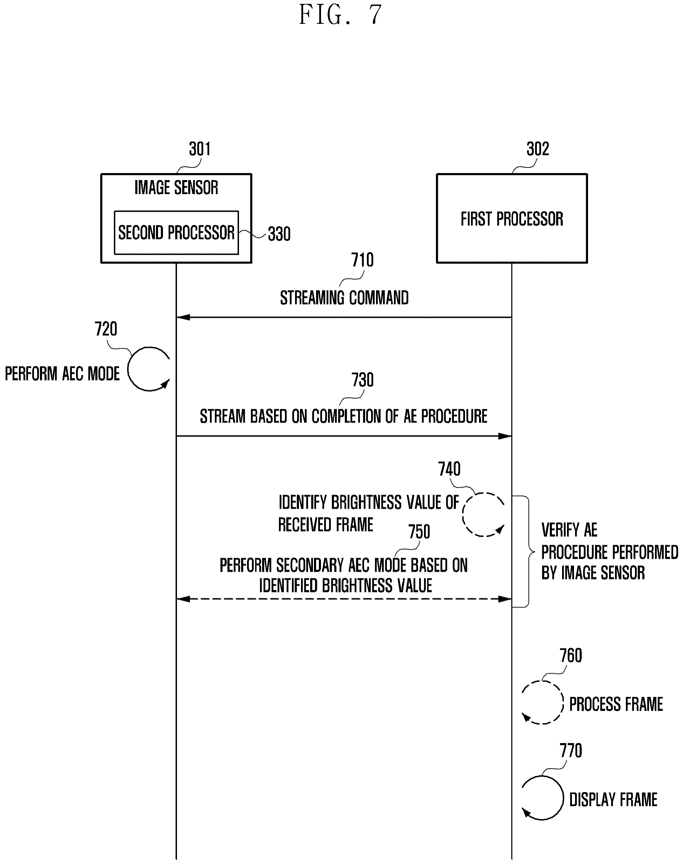

FIG. 7 is a flowchart for describing the operations performed in the electronic device 300 to quickly acquire the image with appropriate brightness from the image sensor 301 according to an embodiment. The instructions may be stored in the first memory 304 and/or the second memory 321. When the instructions are executed by the image sensor 301 (e.g., the second processor 330), the image sensor 301 may perform the operations of FIG. 7. Some of the operations of FIG. 7 may be performed by the first processor 302.

In operation 710, the image sensor 301 may receive the streaming command (e.g., the command to operate in the preview mode) from the first processor 302. According to an embodiment, the image sensor 301 may receive the configuration information (e.g., frame rate, resolution, white balance) for setting the preview mode from the first memory 304 through the first processor 302 and store the received configuration information in the second memory 321. In addition, the image sensor 301 may receive the command from the first processor 302 to perform the AEC in the automatic mode (e.g., Table 1). For example, the image sensor 301 may receive a mode switching command from the first processor 302 to automatically switch to the preview mode after performing the AEC mode. The image sensor 301 may receive the information about the target brightness value (and/or the target exposure value) from the first processor 302. After receiving the mode switching command and the information about the AEC mode, the image sensor 301 may receive the streaming command from the first processor 302.

In operation 720, the image sensor 301 may perform the AEC mode in response to the streaming command. According to an embodiment, the operations of FIG. 5 described above for the AE procedure may be performed. The operations of FIG. 5 are an embodiment of the AE procedure, and various AE algorithms may be used in the AE procedure. For example, APEX system (additive system of photographic exposure) may be used as an algorithm for the AE procedure in operation 720. Thus, in this embodiment, a time until performing of the streaming may be reduced without additionally required data communication.

In operation 730, the image sensor 301 may perform the designated streaming mode (e.g., preview mode) based on the completion of AE procedure as a result of performing operation 720 (e.g., when the brightness of the frame converges to the first target brightness value (for example, within a target brightness interval or in a brightness interval with respect to the target brightness value) or the condition described with reference to FIG. 5 (e.g., (e.g., the threshold number of times is reached or the threshold time is exceeded)) is satisfied).

According to an embodiment, operations 740 and 750 may be performed as a verification procedure (or, a procedure for more accurate AE procedure) of the AE procedure performed by the image sensor 301.

In operation 740, the first processor 302 may identify the brightness value of the frame received from the image sensor 301. The first processor 302 may perform operation 750 based on the identified brightness value. For example, the first processor 302 may identify that the identified brightness value is different from the second target brightness value (e.g., may be the same as or different from the first target brightness value), and thus perform operation 750 for a secondary AE procedure.

In operation 750, the first processor 302 may perform a secondary AEC mode based on the identified brightness value. The AE algorithm used for the secondary AE procedure may be an algorithm according to the embodiment of FIG. 5 or may be another AE algorithm (e.g., APEX System). The first processor 302 may transmit the shutter value and/or the gain value calculated as a result of performing the secondary AEC mode to the image sensor 301. The image sensor 301 may perform the streaming operation of acquiring the image data using the shutter value and/or the gain value received from the first processor 302 and outputting the image data to the first processor 302. This operation 750 may allow a verification procedure and/or for more accurate calculation of the shutter value and gain value by use of the first processor. Operations 740 and 750 are optional and may be omitted. The secondary AE procedure requires data communication through the interface between the image sensor 301 and the first processor 302, and thus may take relatively longer than a primary AE procedure performed by the image sensor 301 itself. When the verification of the AE procedure and/or a more accurate AE procedure is prioritized, operation 750 may be performed.

In operation 760, the first processor 302 may process the frame received from the image sensor 301. For example, the ISP 360 in the first processor 302 may adjust the size of the frame to fit the size of the display area of the screen. As another example, the ISP 360 may perform color correction and/or backlight correction on the frame. As another example, the ISP 360 may perform white balance for balancing white color in the frame. Operation 760 is optional and may be omitted.

In operation 770, the first processor 302 may process the frame received (or processed) from the image sensor 301 on the display 303.

According to an embodiment described above with reference to FIG. 7, the primary AE procedure may be performed quickly (e.g., 240fps) on the image sensor 301 and the secondary AE procedure may optionally be performed mainly by the first processor 302. As a result, the preview image may be displayed quickly on the display 303. In addition, since the primary AE procedure is performed mainly by the image sensor 301, the resources (e.g., communication interface, memory, battery power) may be used efficiently.

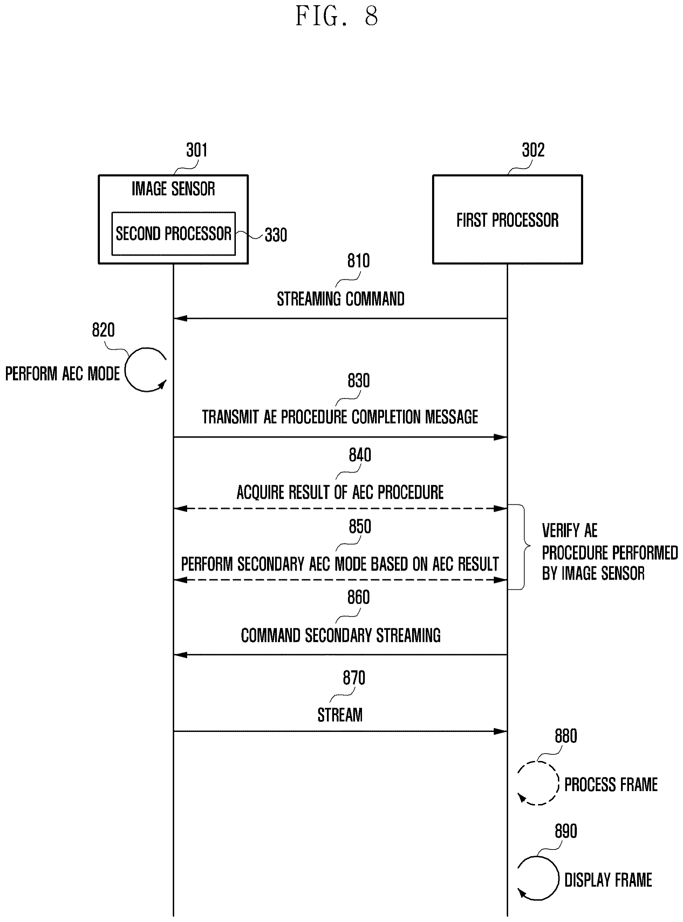

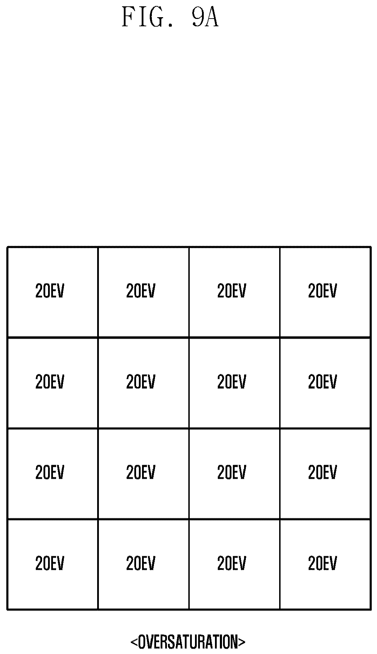

FIG. 8 is a flowchart for describing the operations performed in the electronic device 300 to quickly acquire the image with appropriate brightness from the image sensor 301 according to an embodiment. In the description of FIG. 8, contents overlapping with FIG. 7 may be omitted or briefly described. The instructions may be stored in the first memory 304 and/or the second memory 321. When the instructions are executed by the image sensor 301 (e.g., the second processor 330), the image sensor 301 may perform the operations of FIG. 8. Some of the operations of FIG. 8 may be performed by the first processor 302. FIGS. 9A to 9C are diagrams illustrating exposure values calculated while performing AEC in an image sensor 301 according to an embodiment.

In operation 810, the image sensor 301 may receive the streaming command (e.g., the command to operate in the preview mode) from the first processor 302. According to an embodiment, the image sensor 301 may receive the configuration information (e.g., frame rate, resolution, white balance) for setting the preview mode from the first memory 304 through the first processor 302 and store the received configuration information in the second memory 321. In addition, the image sensor 301 may receive the command from the first processor 302 to perform the AEC in the manual mode (e.g., Table 1). For example, the image sensor 301 may notify the first processor 302 of the completion of the AE procedure and receive the mode switching command from the first processor 302 to switch the mode to the preview mode based on the secondary command of the first processor 302. The image sensor 301 may receive the information about the target brightness value (and/or the target exposure value) from the first processor 302. After receiving the mode switching command and the information about the AEC mode, the image sensor 301 may receive the streaming command from the first processor 302.

In operation 820, the image sensor 301 may perform the AEC mode in response to the streaming command. According to an embodiment, the operations of FIG. 5 described above for the AE procedure may be performed. The operations of FIG. 5 are an embodiment of the AE procedure, and various AE algorithms may be used in the AE procedure.

At operation 830, the image sensor 301 may transmit a message (e.g., "flag" in the description related to Table 1) indicating that the AE procedure is completed to the first processor 302.

According to an embodiment, operations 840 and 850 may be performed as a verification procedure (or, a procedure for more accurate AE procedure) of the AE procedure performed by the image sensor 301.

In operation 840, the first processor 302 may acquire a result of the AE procedure from the image sensor 301. According to an embodiment, the first processor 302 may access a memory area (e.g., a register) allocated to store the results (e.g., the brightness value, the exposure value, the gain value) of the AEC procedure in the second memory 321 of the image sensor 301 and read the results.

In operation 850, the first processor 302 may perform the secondary AEC mode based on the read AEC result. The AE algorithm used for the secondary AE procedure may be an algorithm according to the embodiment of FIG. 5 or may be another AE algorithm (e.g., APEX System). The first processor 302 may transmit the second shutter value and/or the second gain value calculated as a result of performing the secondary AEC mode to the image sensor 302. Operations 840 and 850 are optional and may be omitted.

In operation 860, the first processor 302 may transmit the secondary streaming command to the image sensor 301 based on the AE procedure completion message received from the image sensor 301. Thus, a manual switching mode may be provided, wherein when the AE procedure is completed, the message indicates that the image sensor may be capable of receiving the streaming command to perform streaming.

In operation 870, the image sensor 301 may perform the designated streaming mode (e.g., the preview mode) based on the secondary streaming command. According to an embodiment, the image sensor 302 may perform the streaming operation to acquire the image data using the first shutter value and the first gain value calculated as a result of performing the primary AEC mode and output the acquired image data to the first processor 302. According to an embodiment, the image sensor 302 may also perform the streaming operation to acquire the image data using the second shutter value and/or the second gain value received from the first processor 302 and output the acquired image data to the first processor 302.

In operation 880, the first processor 302 may process the frame received from the image sensor 301. For example, the ISP 360 in the first processor 302 may adjust the size of the frame to fit the size of the display area of the screen. As another example, the ISP 360 may perform color correction and/or backlight correction on the frame. As another example, the ISP 360 may perform the white balance for balancing the white color in the frame. Operation 880 is optional and may be omitted.

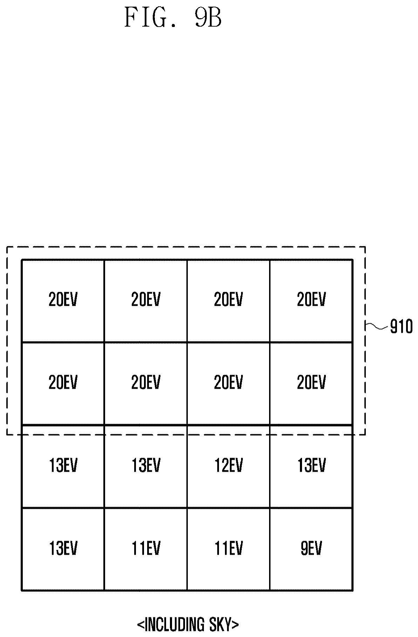

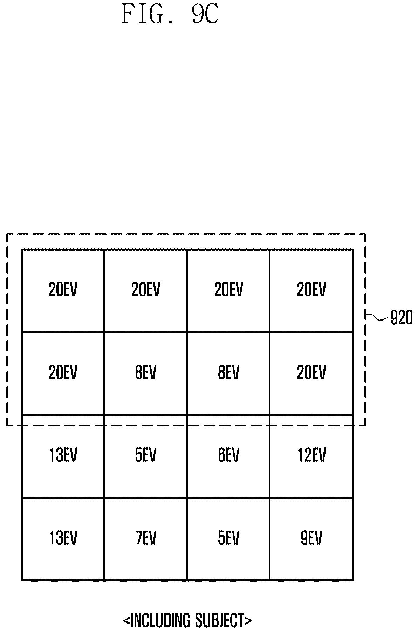

According to an embodiment, the first processor 302 may include the exposure information indicating the exposure value for each area in the frame in the result of the AE procedure acquired from the image sensor 301. For example, the frame may be divided into a total of 16 areas, and the exposure information indicating how much the exposure value Ev for each area is may be included in the result of the AE procedure. The first processor 302 may perform operation 880 (e.g., color correction and/or backlight correction) using exposure information of a scene (e.g., a scene in which the entire area of the frame is oversaturated with 20Ev, as illustrated in FIG. 9A; a scene (e.g., including the sky) (FIG. 9B) in which the entire upper area 910 of the frame is oversaturated with 20Ev, as illustrated in FIG. 9B; or a scene (e.g., including the subject) in which at least a part of an upper area 920 of the frame has an exposure value (e.g., 8Ev) less than 20Ev, as illustrated in FIG. 9C.) captured in the AEC mode.

In operation 890, the first processor 302 may process the frame received (or processed) from the image sensor 301 on the display 303.

According to an embodiment described above with reference to FIG. 8, the primary AE procedure may be performed quickly (e.g., 240fps) on the image sensor 301 and the secondary AE procedure may optionally be performed mainly by the first processor 302. As a result, the preview image may be displayed quickly on the display 303. In addition, since the primary AE procedure is performed mainly by the image sensor 301, the resources (e.g., communication interface, memory, battery power) may be used efficiently.

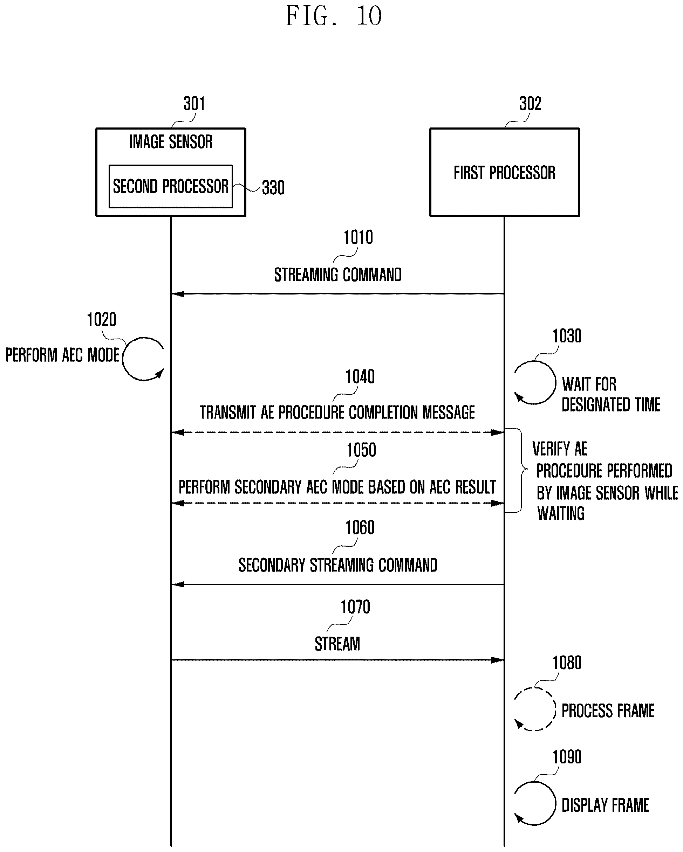

FIG. 10 is a flowchart for describing the operations performed in the electronic device 300 to quickly acquire the image with appropriate brightness from the image sensor 301 according to an embodiment. In the description of FIG. 10, contents overlapping with FIGS. 7 and 8 may be omitted or briefly described. The instructions may be stored in the first memory 304 and/or the second memory 321. When the instructions are executed by the image sensor 301 (e.g., the second processor 330), the image sensor 301 may perform the operations of FIG. 10. Some of the operations of FIG. 10 may be performed by the first processor 302.

In operation 1010, the image sensor 301 may receive the streaming command (e.g., the command to operate in the preview mode) from the first processor 302. According to an embodiment, the image sensor 301 may receive the configuration information (e.g., frame rate, resolution, white balance) for setting the preview mode from the first memory 304 through the first processor 302 and store the received configuration information in the second memory 321. In addition, the image sensor 301 may receive the command from the first processor 302 to perform the AEC in the delay mode (e.g., Table 1). For example, the image sensor 301 may receive, from the first processor 302, the mode switching command to switch the mode to the preview mode based on the secondary command of the first processor 302 after the completion of the AE procedure. The image sensor 301 may receive the information about the target brightness value (and/or the target exposure value) from the first processor 302. After receiving the mode switching command and the information about the AEC mode, the image sensor 301 may receive the streaming command from the first processor 302.

In operation 1020, the image sensor 301 may perform the AEC mode in response to the streaming command. According to an embodiment, the operations of FIG. 5 described above for the AE procedure may be performed. The operations of FIG. 5 are an embodiment of the AE procedure, and various AE algorithms may be used in the AE procedure.

In operation 1030, the first processor 302 may wait for a designated time after transmitting the streaming command so that the image sensor 301 may complete the AE procedure. Thus, a delay mode is provided which does not necessarily require an additional data communication (message) for receiving the streaming command when time is elapsed.

According to an embodiment, operations 1040 and 1050 may be performed as the verification procedure (or, a procedure for more accurate AE procedure) of the AE procedure performed by the image sensor 301 while waiting. For example, operations 1040 and 1050 may be the same as operations 840 and 850. The first processor 302 may transmit the second shutter value and/or the second gain value calculated as a result of performing the secondary AEC mode to the image sensor 302. Operations 1040 and 1050 are optional and may be omitted.

In operation 1060, the first processor 302 may transmit the secondary streaming command to the image sensor 301 based on the elapsed waiting time.

In operation 1070, the image sensor 301 may perform the designated streaming mode (e.g., the preview mode) based on the secondary streaming command. According to an embodiment, the image sensor 301 may perform the streaming operation to acquire the image data using the first shutter value and the first gain value calculated as a result of performing the primary AEC mode and output the acquired image data to the first processor 302. According to an embodiment, the image sensor 301 may also perform the streaming operation to acquire the image data using the second shutter value and/or the second gain value received from the first processor 302 and output the acquired image data to the first processor 302.

In operation 1080, the first processor 302 may process the frame received from the image sensor 301. For example, the ISP 360 in the first processor 302 may adjust the size of the frame to fit the size of the display area of the screen. As another example, the ISP 360 may perform color correction and/or backlight correction on the frame. As another example, the ISP 360 may perform the white balance for balancing the white color in the frame. Operation 1080 is optional and may be omitted.

According to an embodiment, the first processor 302 may include the exposure information indicating the exposure values for each area in the frame in the result of the AE procedure acquired from the image sensor 301. For example, the frame may be divided into a total of 16 areas, and the exposure information indicating how much the exposure value Ev for each area is may be included in the result of the AE procedure. For example, the first processor 302 may determine, based on the result of the AE procedure, that the scene in the oversaturated state of FIG. 9A, the scene including the sky of FIG. 9B, or the scene including the subject of FIG. 9C is captured in the AEC mode, and may perform operation 1080 (e.g., color correction and/or backlight correction) based on the exposure information of the scene.

In operation 1090, the first processor 302 may process the frame received (or processed) from the image sensor 301 on the display 303.

According to an embodiment described above with reference to FIG. 10, the primary AE procedure may be performed quickly (e.g., 240fps) on the image sensor 301 and the secondary AE procedure may optionally be performed mainly by the first processor 302. As a result, the preview image may be displayed quickly on the display 303. In addition, since the primary AE procedure is performed mainly by the image sensor 301, the resources (e.g., communication interface, memory, battery power) may be used efficiently.

According to an embodiment, the image sensor 301 may perform the AEC using a lookup table such as Tables 2 and 3 below. For example, Tables 2 and 3 may be used when performing the operations 520, 720, 820, or 1020 described above. The information about Tables 2 and 3 may be stored in the second memory 321. For example, the corresponding information may be loaded from the first memory 304 to the second memory 321 based on the occurrence of the camera on event.

**[Table 2]**

| Frame rate | 240fps | | | | | |
|---|---|---|---|---|---|---|
| Frame | 1^{st} frame | 2^{nd} frame | 3^{rd} frame | 4^{th} frame | 5^{th} frame | 6^{th} frame |
| Duration | 4.17ms | 4.17ms | 4.17ms | 4.17ms | 4.17ms | 4.17ms |
| Gain value Sv | 1 | 1 | 1 | 1.6 | 6.139089 | 24.55635 |
| Shutter value Tv | 0.1 | 0.4 | 1.6 | 4 | 4.17 | 4.17 |
| Tv*Sv | 0.1 | 0.4 | 1.6 | 6.4 | 25.6 | 102.4 |
| Ratio | 1 | 4 | 16 | 64 | 256 | 1024 |

Referring to Table 2, the image sensor 301 may set the frame rate to 240fps. Accordingly, duration per frame may be designated as 4.17 ms. The gain value Sv and the shutter value Tv may be set as shown in Table 2 so that the brightness may increase at a designated ratio from the first frame to the sixth frame. In Table 2, the shutter value Tv is a value representing the exposure time, and the unit may be milliseconds which is the same as the duration. Therefore, a maximum value of the exposure time may be the same as the duration.

**[Table 3]**

| Exposure value Ev | 1^{st} frame brightness value | 2^{nd} frame brightness value | 3^{rd} frame brightness value | 4^{th} frame brightness value | 5^{th} frame brightness value | 6^{th} frame brightness value |
|---|---|---|---|---|---|---|
| 20 | 1024 | | | | | |
| 19 | 512 | | | | | |
| 18 | 256 | 1024 | | | | |
| 17 | 128 | 512 | | | | |
| 16 | 64 | 256 | 1024 | | | |
| 15 | 32 | 128 | 512 | | | |
| 14 | 16 | 64 | 256 | 1024 | | |
| 13 | 8 | 32 | 128 | 512 | | |
| 12 | 4 | 16 | 64 | 256 | 1024 | |
| 11 | 2 | 8 | 32 | 128 | 512 | |
| 10 | 1 | 4 | 16 | 64 | 256 | 1024 |
| 9 | | 2 | 8 | 32 | 128 | 512 |
| 8 | | 1 | 4 | 16 | 64 | 256 |
| 7 | | | 2 | 8 | 32 | 128 |
| 6 | | | 1 | 4 | 16 | 64 |
| 5 | | | | 2 | 8 | 32 |
| 4 | | | | 1 | 4 | 16 |
| 3 | | | | | 2 | 8 |
| 2 | | | | | 1 | 4 |
| 1 | | | | | | 2 |
| 0 | | | | | | 1 |

The image sensor 301 may divide the frame into the designated number of regions (e.g., 16 (4*4), 64 (8*8), 256 (16*16), or 4096 (64*64)) and identify the brightness value for each area.

Referring to Table 3, when the brightness value (e.g., the average of the entire frame or the average of the region(s) of interest)) from the first frame is saturated to 1024 (maximum value), the image sensor 301 may determine the exposure value of the corresponding region as 20Ev. For example, when the user captures the sky in a bright daylight with strong sunlight, the exposure value of 20Ev may be derived from the first frame.

According to an embodiment, when a brightness value (average of the entire frame) of a sixth frame in a first attempt for the AE procedure is measured as 512 which is half of 1024, the image sensor 301 may determine the exposure value of the corresponding region as 9. For example, when 10Ev is the target exposure value (target Ev), in the second attempt, the image sensor 301 may reset the gain value Sv and/or the shutter value Tv for the corresponding area so that the brightness value can increase from the first frame to the sixth frame at a ratio designated in Table 2. When setting the gain value Sv and/or the shutter value Tv, the image sensor 301 may make the value obtained by multiplying Tv and Sv the same as the numerical value described in Table 2. When the brightness value increases from the first frame to the sixth frame at a ratio designated in Table 2, the image sensor 301 may determine that the exposure value corresponds to 10Ev, and thus complete the AE procedure and perform another streaming mode (e.g., preview mode).

According to an embodiment, the image sensor 301 may perform the AEC using Table 3 and Table 4 below. For example, Tables 3 and 4 may be used when performing the operations 520, 720, 820, or 1020 described above. The information about Tables 3 and 4 may be stored in the second memory 321. For example, the corresponding information may be loaded from the first memory 304 to the second memory 321 based on the occurrence of the camera on event. Compared to when using Table 2, the speed until the AE procedure is completed is slow, but the calculation of the exposure value may be relatively accurate because the gain value is relatively small to reduce the noise component.

**[Table 4]**

| Frame rate | 240fps | | | | 66fps | 35fps |
|---|---|---|---|---|---|---|
| Frame | 1^{st} frame | 2^{nd} frame | 3^{rd} frame | 4^{th} frame | 5^{th} frame | 6^{th} frame |
| Frame duration | 4.17ms | 4.17ms | 4.17ms | 4.17ms | 15ms | 28.33ms |
| Gain value Sv | 1 | 1 | 1 | 1.6 | 1.706667 | 3.614543 |
| Shutter value Tv | 0.1 | 0.4 | 1.6 | 4 | 15 | 28.33 |
| Tv*Sv | 0.1 | 0.4 | 1.6 | 6.4 | 25.6 | 102.4 |
| Ratio | 1 | 4 | 16 | 64 | 256 | 1024 |

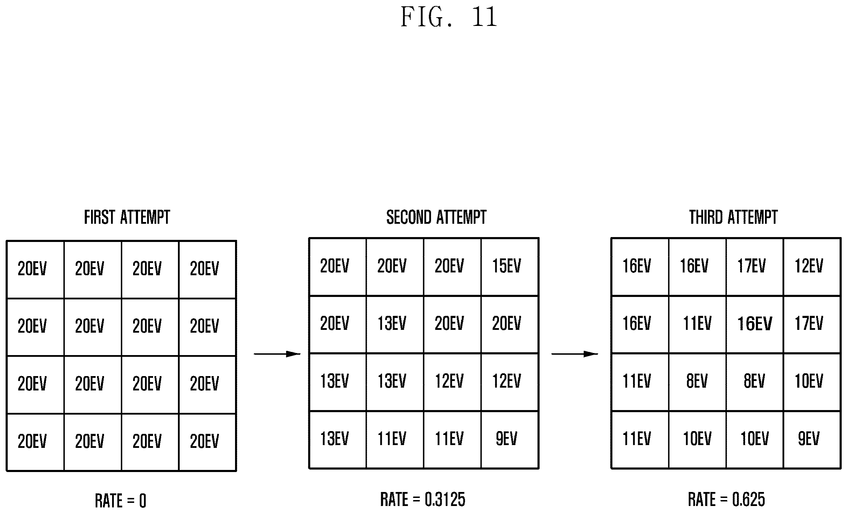

FIG. 11 is a diagram for describing the AEC mode performed in the image sensor 301 according to an embodiment.

The image sensor 301 may divide the frame into the designated number of regions (e.g., 16 (4*4) as illustrated in FIG. 11). The image sensor 301 may generate frames using the above-described Table 2 (or Table 4) and identify the brightness value for each region in each frame. The image sensor 301 may determine the exposure value Ev for each region based on the identified brightness value and Table 3. When the ratio of regions having the target exposure value (e.g., 7 to 12Ev) in all regions is greater than or equal to a designated reference value (e.g., 0.4), the image sensor 301 may complete the AE procedure and perform another streaming mode (e.g., preview mode). Referring to FIG. 11, in the first attempt for the AE procedure, when the brightness value is 1024 in all areas of the first frame (see Table 3), the image sensor 301 may determine the exposure value Ev as 20 for all areas and the ratio as '0'. In the second attempt, the image sensor 301 may reset the gain value Tv and the shutter value Sv so that the ratio may increase. When the image sensor 301 sets the values, the product (Tv*Sv) of the two values may be equal to the values described in Tables 2 and 3. The image sensor 301 may identify as the result of the second attempt that the rate is 0.3125 (=5/16), which is lower than the set reference value (e.g., 0.4), and may reset the gain value Sv and the shutter value Tv for the third attempt. In this case, the product of the two values may be equal to the values described in Tables 2 and 3. The image sensor 301 may complete the AE procedure by identifying as the result of the third attempt that the ratio is 0.625 (=10/16) which is greater than or equal to the set reference value (e.g., 0.4).

According to an embodiment, the electronic device (e.g., the electronic device 300 of FIG. 3 or the electronic device 101 of FIG. 1) includes: a processor; an image sensor configured to convert light received through a lens into an electrical signal, convert the electrical signal into image data, and output the image data to the processor; and a memory storing instructions. When executed by the image sensor individually or collectively, the instructions may cause the image sensor to perform an operation of calculating the first shutter value and the first gain value for causing the brightness of the image data acquired by the image sensor to converge to the designated target brightness value. The instructions may cause the image sensor to perform a streaming operation of acquiring image data using the first shutter value and the first gain value and outputting the acquired image data to the processor. Therefore, by performing the AE procedure in the image sensor, it may be possible to reduce the frame loss and/or power consumption and efficiently use resources. In addition, the calculation procedure may be performed quickly as it is performed directly in the image sensor. As a result, the AE procedure is performed mainly by the image sensor, which generates frames (image data) so that resources (e.g., communication interface, memory, battery power) may be used efficiently.

The instructions may cause the image sensor to receive the streaming command from the processor (e.g., operation 710), and perform the calculation operation and the streaming operation based on receiving the streaming command. Thus, in this automatic mode, when the calculation is completed, the streaming is automatically performed so that a time until performing of the streaming is reduced without additionally required data communication.

The instructions may cause the image sensor to receive the streaming command from the first processor (e.g., operation 810), perform the calculation operation based on receiving the streaming command, transmit the message indicating that the calculation operation is completed to the processor (e.g., operation 830), and receive the secondary streaming command from the processor after the message is transmitted to the processor (e.g., operation 860), and perform the streaming operation based on receiving the secondary streaming command. Thus, a manual mode may be provided, wherein when the calculation is completed, the message indicates that the image sensor may be capable of receiving the streaming command to perform the streaming. For example, the image sensor may operate in the standby mode after completing the calculation. As a result, the preview image may be displayed quickly on the display and calculation is performed mainly by the image sensor so the resources (e.g., communication interface, memory, battery power) still may be reduced.

The instructions may cause the image sensor to receive the streaming command from the first processor (e.g., operation 1010), perform the calculation operation based on receiving the streaming command, receive the secondary streaming command from the processor (e.g., operation 1060) after the calculation operation is completed, and perform the streaming operation based on receiving the secondary streaming command. The processor may transmit the streaming command and, after the designated time has elapsed, transmit the secondary streaming command to the image sensor (e.g., operation 1060). Thus, a delay mode is provided which does not require an additional data communication (message) for receiving the streaming command when time is elapsed so that no additional data communication is necessarily required. In addition, since the calculation is performed mainly by the image sensor, the resources (e.g., communication interface, memory, battery power) may be used efficiently.

The instructions may cause the image sensor to transmit the information about the first shutter value and the first gain value to the processor based on a request from the processor. The processor may process the image data received from the image sensor through the streaming operation using the information. This may allow, before displaying on a display, optimize properties of the acquires image data. For example, size may be adjusted to the size of the display area of the screen, color correction and/or backlight correction on the frame, white balance for balancing white color in the frame. The instructions may cause the image sensor to transmit the information to the processor through the CCI interface.

The instructions may cause the image sensor to perform the streaming operation through the MIPI interface.

The processor may identify the brightness in the image data acquired using the first shutter value and the first gain value, calculate the second shutter value and/or the second gain value to converge the identified brightness to the target brightness value, and transmit the second shutter value and/or the second gain value to the image sensor. The instructions may cause the image sensor to perform the streaming operation of acquiring the image data using the second shutter value and/or the second gain value received from the processor and outputting the acquired image data to the processor. This may allow a verification procedure and/or for more accurate calculation of the shutter value and gain value by use of the processor. This may also be used for testing (verification). For example, when an identified brightness value is different from a target brightness value, a secondary calculation of the processor may be performed with result being used by the image sensor for the streaming operation of acquiring the image data using the shutter value and/or the gain value received from the processor and outputting the image data to the processor.

The instructions may cause the image sensor to acquire the image data at a first frame rate as part of the calculation operation and to acquire the image data at a second frame rate that is lower than the first frame rate as part of the streaming operation. This may allow the image sensor to perform the calculation of shutter value and gain value even more quickly.

The processor may process the image data received from the image sensor into the preview image through the streaming operation of the image sensor and display the preview image on the display. Thus, the electronic device may quickly enter a preview mode for displaying the image on the display by performing the calculation on the image sensor without intervention of the processor.

According to an embodiment, a method of operating an electronic device (e.g., the electronic device 300 of FIG. 3 or the electronic device 101 of FIG. 1) is provided. The electronic device includes: a processor; and an image sensor configured to convert light received through a lens into an electrical signal, convert the electrical signal into image data and output the image data to the processor. The method may include: calculating, by the image sensor, a first shutter value and a first gain value for causing brightness of the image data acquired by the image sensor to converge to a designated target brightness value; and performing, by the image sensor, a streaming operation of acquiring image data using the first shutter value and the first gain value and outputting the acquired image data to the processor.

The method may further include an operation of receiving, by the image sensor, the streaming command from the processor. The calculation operation and the streaming operation may be performed based on receiving the streaming command.

The method may further include: an operation of receiving, by the image sensor, the streaming command from the processor; an operation of transmitting, by the image sensor, the message indicating that the calculation operation is completed to the processor; and an operation of transmitting the message to the processor and then receiving, by the image sensor, the secondary streaming command from the processor. The calculation operation may be performed based on receiving the streaming command. The streaming operation may be performed based on receiving the secondary streaming command.

The method may further include: an operation of receiving, by the image sensor, the streaming command from the processor; an operation of transmitting, by the processor, transmitting the streaming command and, after the designated time has elapsed, transmitting the secondary streaming command to the image sensor; and an operation of receiving, by the image sensor, the secondary streaming command from the processor. The calculation operation may be performed based on receiving the streaming command. The streaming operation may be performed based on receiving the secondary streaming command.

The method may further include: an operation of transmitting the information about the first shutter value and the first gain value to the processor based on the request from the processor; and an operation of processing, by the processor, the image data received from the image sensor through the streaming operation using the information.

Effects which can be achieved by the present disclosure are not limited to the above-described effects. That is, other effects that are not described may be obviously understood by those skilled in the art to which the present disclosure pertains.

In the above description, the prefixes "first," "second," "third," etc., are only used to distinguish between the same names and do not have any special meaning in themselves, such as importance or order.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device, comprising:
a first processor (302);
an image sensor (301) comprising a second processor (330), the image sensor (301) configured to convert light received through a lens into an electrical signal, convert the electrical signal into image data, and output the image data to the first processor (302); and
memory (304, 321) storing instructions,
wherein, when executed by the second processor (330) individually or collectively, the instructions cause the image sensor (301) to perform:
calculating operation of calculating a first shutter value (Tv) and a first gain value (Sv) for causing a current brightness of the image data acquired by the image sensor (301) to converge to a designated target brightness value; and
a streaming operation of acquiring image data using the first shutter value and the first gain value and outputting the acquired image data to the first processor (302).

2. The electronic device of claim 1, wherein, when executed by the second processor (330), the instructions cause the image sensor (301) to:
receive a streaming command from the first processor (302); and
perform the calculation operation and the streaming operation based on receiving the streaming command.

3. The electronic device of claim 1, wherein, when executed by the second processor (330), the instructions cause the image sensor (301) to:
receive a streaming command from the first processor (302);
perform the calculation based on receiving the streaming command;
transmit a message indicating that the calculation is completed to the first processor (120);
transmit the message to the first processor (302) and then receive a secondary streaming command from the first processor (302); and
perform the streaming based on receiving the secondary streaming command.

4. The electronic device of claim 1, wherein,
the first processor (302) is configured to transmit a streaming command to the image sensor (301) and, after a designated time has elapsed, transmit a secondary streaming command to the image sensor (301), and
when executed by the second processor (330), the instructions cause the image sensor (301) to:
receive the streaming command from the first processor (302);
perform the calculation based on receiving the streaming command;
receive the secondary streaming command from the first processor (302); and
perform the streaming based on receiving the secondary streaming command.

5. The electronic device of one of the claims 1 to 4, wherein, when executed by the second processor (330), the instructions cause the image sensor (301) to transmit information about the first shutter value and the first gain value to the first processor (302) based on a request from the first processor (302), and
the first processor (302) is configured to process the image data received from the image sensor (301) through the streaming operation using the information about the first shutter value and the first gain value.

6. The electronic device of claim 5, wherein, when executed by the second processor (330), the instructions cause the image sensor (301) to transmit the information about the first shutter value and the first gain value to the first processor (302) through a camera control interface, CCI, interface (341, 371).

7. The electronic device of one of the claims 1 to 4, wherein, when executed by the second processor (330), the instructions cause the image sensor (301) to perform the streaming through a mobile industry processor interface, MIPI, interface (342, 372).

8. The electronic device of one of the claims 1 to 7, wherein the first processor (302) is configured to:
identify the brightness in the acquired image data using the first shutter value and the first gain value,
calculate a second shutter value and/or a second gain value for causing the identified brightness to converge to the target brightness value, and
transmit the second shutter value and/or the second gain value to the image sensor (301), and
when executed by the second processor (330), the instructions cause the image sensor (301) to perform streaming to acquire the image data using the second shutter value and/or the second gain value received from the first processor (302) and output the acquired image data to the first processor (302).

9. The electronic device of one of the claims 1 to 8, wherein, when executed by the second processor (330), the instructions cause the image sensor (301) to:
acquire the image data at a first frame rate as part of the calculation; and
acquire the image data at a second frame rate lower than the first frame rate as part of the streaming.

10. The electronic device of any one of claims 1 to 9, wherein the first processor (302) is configured to process the image data received from the image sensor (301) into a preview image through the streaming of the image sensor (301) and display the preview image on a display (303).

11. A method of operating an electronic device, the electronic device including a first processor (302), and an image sensor (301) including a second processor (330) and configured to convert light received through a lens into an electrical signal, convert the electrical signal into image data, and output the image data to the first processor (302), the method comprising:
calculating, by the image sensor (301), a first shutter value (Tv) and a first gain value (Sv) for causing a current brightness of the image data acquired by the image sensor (301) to converge to a designated target brightness value; and
performing, by the image sensor (301), a streaming operation of acquiring image data using the first shutter value and the first gain value and outputting the acquired image data to the first processor (302).

12. The method of claim 11, further comprising:
receiving, by the image sensor (301), a streaming command from the first processor (302),
wherein the calculating and the streaming are performed based on receiving the streaming command.

13. The method of claim 11, further comprising:
receiving, by the image sensor (301), a streaming command from the first processor (302);
transmitting, by the image sensor (301), a message indicating that the calculating is completed to the first processor (302); and
after the message is transmitted to the first processor (302), receiving, by the image sensor (301), a secondary streaming command from the first processor (302), and
wherein the calculating is performed based on receiving the streaming command, and
the streaming is performed based on receiving the secondary streaming command.

14. The method of claim 11, further comprising:
receiving, by the image sensor (301), a streaming command from the first processor (302);
transmitting, by the first processor (302), the streaming command and, after a designated time has elapsed, transmitting the secondary streaming command to the image sensor (301); and
receiving, by the image sensor (301), the secondary streaming command from the processor (120),
wherein the calculating is performed based on receiving the streaming command, and
the streaming is performed based on receiving the secondary streaming command.

15. The method of one of the claims 11 to 14, further comprising:
transmitting information about the first shutter value and the first gain value to the first processor (302) based on a request from the first processor (302); and
processing, by the first processor (302), the image data received from the image sensor (301) through the streaming operation using the information about the first shutter value and the first gain value.
